# EUROPÄISCHE PATENTSCHRIFT

(11) **EP 1 706 983 B1**
(45) Veröffentlichungstag und Bekanntmachung des Hinweises auf die Patenterteilung: **08.01.2014**
(21) Anmeldenummer: 04791110.2
(22) Anmeldetag: 01.10.2004
(51) Int. Cl.: H04M 1/725

(54) **MOBILTELEFON**
MOBILE TELEPHONE
TELEPHONE MOBILE

(30) Priorität: 22.01.2004 DE 102004003344
(43) Veröffentlichungstag der Anmeldung: 04.10.2006
(73) Patentinhaber: Nokia Solutions and Networks GmbH & Co. KG, 81541 Munich (DE)
(72) Erfinder: LEDERER, Thomas, 82211 Herrsching (DE)
(74) Vertreter: Weidel, Gottfried
(86) Internationale Anmeldenummer: PCT/EP2004/052395
(87) Internationale Veröffentlichungsnummer: WO 2005/071932

(56) Entgegenhaltungen:
- EP-A1- 1 172 991
- EP-A2- 0 719 022
- EP-A2- 1 063 837
- EP-A2- 1 109 378
- JP-A- 9 261 299
- US-A- 5 924 046
- US-B1- 6 456 696

## Beschreibung

Die Erfindung betrifft ein Mobiltelefon oder ein in einem tragbaren Computer integriertes Mobiltelefon.

In den letzten Jahren führte der weltweite Siegeszug der Mobilkommunikation dazu, dass große Teile der Bevölkerung häufig oder ständig ein Mobiltelefon mit sich führen. Ein Nachteil der sich daraus ergebenden ständigen mobilen Erreichbarkeit liegt darin, dass an einem Mobiltelefon ankommende Rufe, die dem Nutzer des Mobiltelefons üblicherweise durch eine akustische Anrufsignalisierung signalisiert werden, in bestimmten Situationen, beispielsweise in einer Besprechung oder während einer Theateraufführung, als äußerst störend empfunden werden.

Um diesen Nachteil zu beheben, werden seit Jahren weltweit größte Anstrengungen unternommen. So wurde beispielsweise eine Vibrationssignalisierung entwickelt und bereitgestellt, welche anstelle der akustischen Anrufsignalisierung einen ankommenden Ruf durch eine Vibration des Mobiltelefons bzw. eines Teils des Mobiltelefons signalisiert.

Außerdem wurden Mobiltelefone entwickelt, welche gemäß unterschiedlich definierter Profile in verschiedene Betriebszustände versetzt werden können, so dass beispielsweise in einem Profil "Besprechung" keine akustische Anrufsignalisierung erfolgt, wohingegen bei der Auswahl eines Profils "Normal" ein ankommender Ruf schon durch eine akustische Anrufsignalisierung signalisiert wird.

Andere Weiterentwicklungen, die sich jedoch in der Praxis bisher nicht durchgesetzt haben, zielen darauf ab, die Lautstärke der akustischen Anrufsignalisierung automatisch an die Umgebung anzupassen. So wurde beispielsweise vorgeschlagen permanent das Umgebungsgeräusch in der Umgebung eines Mobiltelefons zu messen, und in Abhängigkeit des gemessenen Umgebungsgeräusches die Lautstärke der akustischen Anrufsignalisierung einzustellen.

Wie jeder Nutzer eines Mobiltelefons weiß, können jedoch all diese Verbesserungen nicht vermeiden, dass dennoch in unpassenden Situationen immer wieder ankommende Rufe durch eine akustische Anrufsignalisierung signalisiert werden, die in der jeweiligen Situation als äußerst störend empfunden wird. Insbesondere wenn ein Nutzer des Mobiltelefons ein Mobiltelefon dabei noch in einer Jackentasche oder Aktentasche verstaut hat, dauert es häufig noch einige Zeit bis der Nutzer es nach hektischen Versuchen endlich geschafft hat, die akustische Anrufsignalisierung durch Annahme des Rufes oder Abweisen des Rufes mittels Betätigung der entsprechenden Taste endlich zu deaktivieren.

Patentanmeldung EP1063837 offenbart ein Kommunikationsgerät unter dem Einfluss eines Beschleunigungssensor.

Der Erfindung liegt daher die Aufgabe zugrunde, ein Mobiltelefon anzugeben, das verglichen mit dem Stand der Technik eine praktikable oder komfortable Deaktivierung einer akustischen Anrufsignalisierung ermöglicht.

Diese Aufgabe wird gelöst durch die Merkmale des unabhängigen Patentanspruchs. Vorteilhafte und zweckmäßige Weiterbildungen der Erfindung sind durch die Merkmale der abhängigen Ansprüche bestimmt.

Die Erfindung beruht demnach auf dem Gedanken, ein Mobiltelefon derart auszugestalten, dass die akustische Anrufsignalisierung automatisch dann deaktiviert wird, wenn ein durch eine Sensoreinrichtung erfasster Stoß-Messwert, der insbesondere während der akustischen Anrufsignalisierung ermittelt wird, über einem vorgegebenen Stoß-Schwellwert liegt.

Vorzugsweise umfasst die Sensoreinrichtung hierzu einen Beschleunigungssensor, welcher eine durch Stoß- oder Rüttelbewegungen hervorgerufene Krafteinwirkung durch den Nutzer auf das Mobiltelefon als Stoß-Messwert erfasst. Liegt dieser ermittelte Stoß-Messwert über einem vorgegebenen Stoß-Schwellwert, so wird die akustische Anrufsignalisierung automatisch deaktiviert.

Befindet sich also beispielsweise das Mobiltelefon eines Nutzers in dessen Aktentasche, so reicht nach Einsetzen einer akustischen Anrufsignalisierung ein heftiges Rütteln der Aktentasche bzw. ein kräftiger Fußstoß auf die Aktentasche aus, um die akustische Anrufsignalisierung zu deaktivieren.

Diese Lösung ist verglichen mit der bekannten Lösung, welche ein umständliches Öffnen der Aktentasche, eine Entnahme des Mobiltelefons aus der Aktentasche und die Betätigung der entsprechenden Taste zur Deaktivierung der Anrufsignalisierung erfordert, äußerst praktikabel, komfortabel und führt in der Regel zu einer raschen Deaktivierung der störenden akustischen Anrufsignalisierung unmittelbar nach Einsetzen der akustischen Anrufsignalisierung.

Vorzugsweise hat ein über dem Stoß-Schwellwert liegender Stoß-Messwert nur dann einen Einfluss auf die Funktionsweise des Mobiltelefons, insbesondere auf die Aktivierung oder Deaktivierung der Anrufsignalisierung des Mobiltelefons, wenn der über dem Stoß-Schwellwert liegende Stoß-Messwert während einer akustischen Anrufsignalisierung verursacht wurde.

Der Beschleunigungssensor kann im Rahmen der Erfindung auch als Rüttel- oder Bewegungssensor ausgeführt sein. Auch der Einsatz des ohnehin am Mobiltelefon vorhandenen Mikrophonelementes oder eines eigens dafür vorgesehenen Mikrophonelementes als Sensoreinrichtung liegt ihm Rahmen der Erfindung. Denn auch durch beispielsweise einen Stoß mit dem Fuß auf eine Aktentasche, in der sich das Mobiltelefon befindet, wird am Ort des Mikrophonelementes des Mobiltelefons ein Geräusch erzeugt, das als über einem Stoß-Schwellwert liegend detektiert werden kann und in ein entsprechendes Deaktivierungssignal zur Deaktivierung der akustischen Anrufsignalisierung umgesetzt werden kann.

Das Kriterium, dass der erfasste Stoß-Messwert über einem vorgegebenen Stoß-Schwellwert liegt, kann im Rahmen der Erfindung durch eine Reihe äquivalenter Kriterien ersetzt bzw. ergänzt werden, nach welchen beispielsweise zum Vergleich mit dem Stoß-Schwellwert (oder zum Vergleich mit anderen im Folgenden beschriebenen Schwellwerten) Größen herangezogen werden, die in geeigneter Weise auf dem bzw. auf mehreren Stoß-Messwerten beruhen.

Ausgestaltungen der Erfindung sehen vor, dass nach der automatischen Deaktivierung der akustischen Anrufsignalisierung eine Vibrations-Anrufsignalisierung aktiviert wird oder fortgesetzt wird, dass eine optische Anrufsignalisierung aktiviert wird oder fortgesetzt wird, und/oder dass der ankommende Ruf abgewiesen wird oder auf eine Anrufbeantwortereinrichtung, wie beispielsweise eine im Mobilfunksystem realisierte Mailbox, umgeleitet wird. Diese Ausgestaltungen und/oder die erfindungsgemäße automatische Deaktivierung der akustischen Anrufsignalisierung bei Überschreiten eines vorgegebenen Stoß-Schwellwerts durch einen erfassten Stoß-Messwert kann durch den Nutzer des Mobiltelefons beispielsweise über ein Bedienmenü aktiviert bzw. deaktiviert werden.

Vorzugsweise wird vor einer Deaktivierung der akustischen Anrufsignalisierung neben dem Überschreiten eines Stoß-Schwellwerts durch einen erfassten Stoß-Messwert eine weitere Bedingung abgefragt. Diese Bedingung kann beispielsweise darin liegen, dass innerhalb eines vorgegebenen Zeitraums, der vor dem ankommenden Ruf bzw. vor der akustischen Anrufsignalisierung bzw. vor der Erfassung des über dem StoßSchwellwert liegenden Stoß-Messwertes liegt, kein StoßMesswert einen vorgegebenen Dynamik-Schwellwert überschritten hat.

Durch diese weitere Bedingung wird überprüft, ob sich der Nutzer des Mobiltelefons bzw. das Mobiltelefon selbst bei bzw. unmittelbar vor der akustischen Anrufsignalisierung in Ruhe oder in Bewegung befindet. Denn wird das Mobiltelefon zum Zeitpunkt bzw. unmittelbar vor der akustischen Anrufsignalisierung bewegt, beispielsweise durch einen laufenden Nutzer des Mobiltelefons, so könnten die durch das Laufen hervorgerufenen Stoß-Messwerte ungewollt dazu führen, dass die akustische Anrufsignalisierung automatisch deaktiviert wird.

Um dies zu vermeiden, und um eine automatische Deaktivierung der akustischen Anrufsignalisierung nur dann durchzuführen, wenn dies durch ein willentliches Stoßen oder Rütteln des Mobiltelefons absichtlich ausgelöst wird, wird vorzugsweise neben der erfindungsgemäßen Bedingung die vorgenannte weitere Bedingung abgefragt, und nur wenn beide Bedingungen erfüllt sind, die akustische Anrufsignalisierung automatisch deaktiviert.

Vorzugsweise können sowohl der Stoß-Schwellwert, der Dynamik-Schwellwert als auch der zuvor genannte Zeitraum durch den Nutzer selbst eingestellt werden, um das Auslöseverhalten für die Deaktivierung der akustischen Anrufsignalisierung durch den Nutzer selbst an sein Nutzerverhalten anzupassen.

Vorzugsweise wird die akustische Anrufsignalisierung bei einem weiteren ankommenden Ruf von Anfang an unterdrückt, d.h. eine durch die Erfindung deaktivierte akustische Anrufsignalisierung deaktiviert die akustische Anrufsignalisierung solange für alle weiteren kommenden Rufe bis sie durch eine Nutzereingabe wieder aktiviert wird.

Alternativ dazu ist es möglich, dass ein ankommender Ruf durch eine akustische Anrufsignalisierung dann wieder signalisiert wird, wenn nach der erfindungsgemäßen Deaktivierung der akustischen Anrufsignalisierung ein vorgegebener Warte-Zeitraum abgelaufen ist.

Als andere Alternative dazu kann vorgesehen sein, dass die erfindungsgemäße automatische Deaktivierung der akustischen Anrufsignalisierung nur für einen ankommenden Ruf gilt, beim nächsten ankommenden Ruf jedoch die akustische Anrufsignalisierung wieder erfolgt, allerdings ebenso wie beim ankommenden Ruf zuvor wieder durch ein Überschreiten eines Stoß-Schwellwertes durch einen Stoß-Messwert deaktiviert werden kann.

Auch in diesem Fall kann die vorgenannte Bedingung ergänzt werden durch eine Bedingung, bei welcher die Dynamik des Mobiltelefons unmittelbar vor dem ankommenden Ruf bzw. vor der Erfassung des über dem Stoß-Schwellwert liegenden Stoß-Messwertes ermittelt wird und mit einem Dynamik-Schwellwert verglichen wird, wobei eine automatische Deaktivierung der akustischen Anrufsignalisierung erfordert, dass die durch einen oder mehrere Stoß-Messwerte beschriebene Dynamik des Mobiltelefons über einem vorgegebenen Dynamik-Schwellwert liegt.

Vorzugsweise wird der Stoß-Schwellwert in Abhängigkeit von Stoß-Messwerten an die Mobiltelefondynamik angepasst. Wird beispielsweise das Mobiltelefon, das sich in der Jackentasche eines Nutzers befindet, vom sich bewegenden Nutzer ständig ein wenig gestoßen bzw. hin und her bewegt, so wird der Stoß-Schwellwert erhöht, um zu verhindern, dass die akustische Anrufsignalisierung für einen ankommenden Ruf automatisch alleine durch die Trage-Bewegungen deaktiviert wird, d.h. zur Deaktivierung der akustischen Anrufsignalisierung sind dann höhere Stoßmesswerte erforderlich, als durch die Trage-Bewegungen verursacht werden.

So wird beispielsweise der Stoß-Schwellwert erhöht, wenn in einem vor der Erhöhung liegenden Prüfzeitraum ein oder mehrere Stoß-Messwerte einen Aktivitäts-Schwellwert überschritten haben.

Ergänzend oder alternativ hierzu wird der Stoß-Schwellwert reduziert, wenn in einem vor der Reduzierung liegenden Prüfzeitraum kein Stoß-Messwert einen Aktivitätsschwellwert überschritten hat.

Dadurch wird die Schwelle, ab welcher die Deaktivierung einer akustischen Anrufsignalisierung erfolgt, an die Dynamik des Mobiltelefons angepasst, und insbesondere dann erhöht, wenn das Mobiltelefon bewegt wird, bzw. insbesondere dann reduziert, wenn das Mobiltelefon ruht.

Die Erfindung wird im Folgenden anhand bevorzugter Ausführungsbeispiele näher beschrieben, zu deren Erläuterung nachstehend aufgelistete Figuren dienen:
- Figur 1: Prinzipschaltbild eines Mobiltelefons;
- Figur 2: erster Zeitverlauf von Stoß-Messwerten;
- Figur 3: zweiter Zeitverlauf von Stoß-Messwerten.

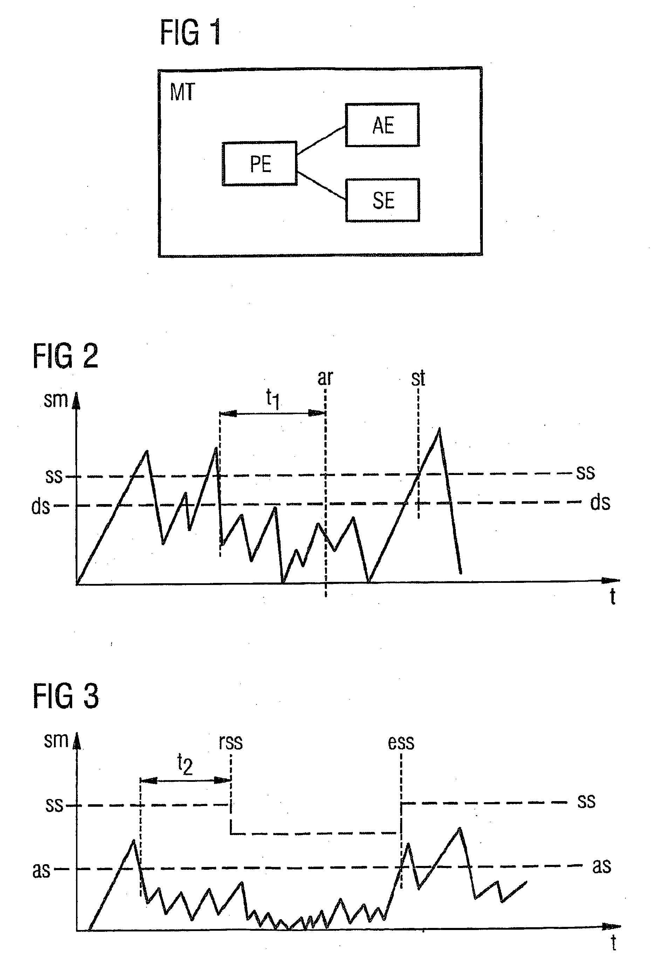

Figur 1 zeigt ein Mobiltelefon MT, das ein Akustikelement AE zur Ausgabe einer akustischen Anrufsignalisierung, beispielsweise eines Ruftons oder einer Ruftonmelodie, eine Sensoreinrichtung SE, wie beispielsweise einen Beschleunigungssensor, einen Bewegungssensor oder einen Rüttelsensor, und eine Prozessoreinrichtung PE umfasst.

Die Prozessoreinrichtung PE steuert dabei insbesondere das Akustikelement AE und die Sensoreinrichtung SE. Das Mobiltelefon MT kann dabei grundsätzlich nach dem Prinzip handelsüblicher Mobiltelefone ausgeführt sein.

Zusätzlich umfasst das Mobiltelefon MT die Sensoreinrichtung SE, die auch Weiterverarbeitungsmittel umfassen kann, um einen ursprünglichen Sensor-Messwert oder mehrere ursprüngliche Sensor-Messwerte in einen Stoß-Messwert umzusetzen. Ebenso können die Weiterverarbeitungsmittel durch die Prozessoreinrichtung oder andere eigens für diesen Zweck vorgesehene Mittel realisiert werden. Außerdem ist zusätzlich die Prozessoreinrichtung PE programmtechnisch derart eingerichtet, dass die akustische Anrufsignalisierung eines ankommenden Rufes automatisch dann deaktiviert wird, wenn der durch die Sensoreinrichtung SE erfasste Stoß-Messwert über einem vorgegebenen Stoß-Schwellwert liegt. Entsprechende Programmdaten und/oder Parameter, wie ein Stoß-Schwellwert, ein Dynamik-Schwellwert und/oder ein Aktivitäts-Schwellwert können in einer nicht dargestellten Speichereinrichtung, die der Prozessoreinrichtung zugeordnet ist, abgespeichert sein.

Figur 2 zeigt den zeitlichen Verlauf eines Stoß-Messwertes sm. Der Stoß-Messwert sm kann dabei der von der Sensoreinrichtung SE erfasste Messwert oder eine andere auf diesem Messwert basierende Größe sein. Der Stoß-Messwert sm kann auch - anders als in der Zeichnung dargestellt - zu diskreten Zeitpunkten ermittelt werden. Zu einem Zeitpunkt ar setzt eine akustische Anrufsignalisierung ein, um einen ankommenden Ruf zu signalisieren. Liegt nun zu einem Zeitpunkt st aufgrund des Stoßes durch den Nutzer des Mobiltelefons auf das Mobiltelefon der Stoßmesswert sm über einem vorgegebenen Stoß-Schwellwert ss, und lag in einem vorgegebenen Zeitraum t1 vor dem Zeitpunkt ar des Einsetzens der Anrufsignalisierung kein Stoß-Messwert sm über einem vorgegebenen Dynamik-Schwellwert ds, so wird durch den über dem Stoß-Schwellwert ss liegenden Stoß-Messwert sm automatisch die akustische Anrufsignalisierung deaktiviert.

Zur technischen Realisierung der zweitgenannten Bedingung, also der Bedingung, dass kein Stoß-Messwert sm für einen vorgegebenen Zeitraum t1 über einem vorgegebenen Dynamik-Schwellwert ds liegt, gibt es eine Vielzahl von gleichwirkenden Ausgestaltungen, die selbstverständlich ebenfalls alle im Rahmen der Erfindung liegen. So kann nach einem oder mehreren Stoß-Messwerten, die über dem Dynamik-Schwellwert lagen, beispielsweise immer dann ein Timer gestartet werden, wenn der Stoß-Messwert sm den vorgegebenen Dynamik-Schwellwert ds erstmals wieder unterschreitet. Durch ein Überschreiten des Stoß-Messwertes sm über den Dynamik-Schwellwert ds wird der Timer wieder gestoppt. Liegt die gemessene Zeitdauer über einer vorgegebenen Zeitspanne t1, so wird die akustische Anrufsignalisierung im Folgenden automatisch dann deaktiviert, wenn ein Stoß-Messwert sm über dem vorgegebenen StoßSchwellwert ss liegt. Liegt im Folgenden ein Stoß-Messwert wieder über dem Dynamik-Schwellwert, so ist es vor einer Deaktivierung der akustischen Anrufsignalisierung durch ein Überschreiten eines Stoß-Messwertes über einen Stoß-Schwellwert erst wieder erforderlich, dass der durch einen - wie oben beschrieben - gestarteten und gestoppten Timer gemessene Zeitraum über einer vorgegebenen Zeitspanne t1 liegt usw.

Figur 3 zeigt die automatische Anpassung des Stoß-Schwellwertes ss an die Dynamik des Mobiltelefons. Dabei wird die Dynamik des Mobiltelefons wieder auf der Basis der gemessenen Stoß-Messwerte sm bestimmt. Liegt beispielsweise der gemessene Stoß-Messwert über einen vorgegebenen Prüf-Zeitraum t2 unter einer vorgegebenen Aktivitäts-Schwelle as, so wird zum Zeitpunkt rss der vorgegebene Stoß-Schwellwert ss reduziert, da in diesem Fall davon auszugehen ist, dass der Nutzer des Mobiltelefons bzw. das Mobiltelefon selbst in Ruhe ist. Und wenn das Mobiltelefon in Ruhe ist, dann soll auch ein schwächerer Stoß des Nutzers des Mobiltelefons auf das Mobiltelefon ausreichen, um die akustische Anrufsignalisierung zu deaktivieren. Liegt der gemessene Stoß-Messwert später wieder über dem Aktivitäts-Schwellwert as, so ist davon auszugehen, dass der Nutzer des Mobiltelefons bzw. das Mobiltelefon selbst nicht mehr ruht, sondern in Bewegung ist. In diesem Fall wird zum Zeitpunkt ess der vorgegebene StoßSchwellwert ss wieder erhöht, um eine versehentliche Deaktivierung der akustischen Anrufsignalisierung zu verhindern.

Neben den genannten Ausführungsbeispielen liegt eine Vielzahl weiterer Ausführungsbeispiele im Rahmen der Erfindung, welche bei Kenntnis der vorliegenden Beschreibung durch einen Fachmann leicht ausgeführt werden können.

## Patentansprüche

1. Mobiltelefon (MT)
mit einem Akustikelement (AE) zur akustischen Anrufsignalisierung eines ankommenden Rufes,
mit einer Sensoreinrichtung (SE) zur Erfassung eines Stoß-Messwertes, und
mit einer Prozessoreinrichtung (PE), die derart eingerichtet ist, dass die akustische Anrufsignalisierung automatisch deaktiviert wird, wenn der erfasste Messwert (sm) über einem vorgegebenen Stoß-Schwellwert (ss) liegt,
**dadurch gekennzeichnet, dass** nach der automatischen Deaktivierung der akustischen Anrufsignalisierung eine Annahme des Rufes weiter möglich ist.

2. Mobiltelefon nach Anspruch 1,
bei dem die Sensoreinrichtung (SE) einen Beschleunigungssensor umfasst.

3. Mobiltelefon nach einem der vorhergehenden Ansprüche,
bei dem die Sensorreinrichtung (SE) derart ausgestaltet ist, dass Krafteinwirkungen vom Nutzer auf das Mobiltelefon (MT) mittels eines Stoß-Messwertes erfasst werden.

4. Mobiltelefon nach einem der vorhergehenden Ansprüche,
bei dem nach der automatischen Deaktivierung der akustischen Anrufsignalisierung eine Vibrations-Anrufsignalisierung aktiviert wird oder fortgesetzt wird.

5. Mobiltelefon nach einem der vorhergehenden Ansprüche,
bei dem nach der automatischen Deaktivierung der akustischen Anrufsignalisierung eine optische Anrufsignalisierung aktiviert wird oder fortgesetzt wird.

6. Mobiltelefon nach einem der vorhergehenden Ansprüche,
bei dem mit der automatischen Deaktivierung der akustischen Anrufsignalisierung der ankommende Ruf abgewiesen wird oder auf eine Anrufbeantwortereinrichtung umgeleitet wird.

7. Mobiltelefon nach einem der vorhergehenden Ansprüche,
bei dem die akustische Anrufsignalisierung automatisch deaktiviert wird, wenn der erfasste Stoß-Messwert über einem vorgegebenen Stoß-Schwellwert (ss) liegt, und wenn innerhalb eines vorgegebenen Zeitraums, der vor dem ankommenden Ruf bzw. vor der akustischen Anrufsignalisierung bzw. vor der Erfassung des über dem Stoß-Schwellwert (ss) liegenden Stoß-Messwertes liegt, kein Stoß-Messwert einen vorgegebenen Dynamik-Schwellwert überschritten hat.

8. Mobiltelefon nach einem der vorhergehenden Ansprüche,
bei dem der Stoß-Schwellwert (ss), der Dynamik-Schwellwert und/oder der Zeitraum durch den Nutzer einstellbar ist.

9. Mobiltelefon nach einem der vorhergehenden Ansprüche,
bei dem die akustische Anrufsignalisierung für weitere ankommenden Rufe deaktiviert bleibt.

10. Mobiltelefon nach einem der Ansprüche 1 bis 8,
bei dem die akustische Anrufsignalisierung bei einem weiteren ankommenden Ruf zumindest wieder solange aktiviert wird bis ein erfasster Stoß-Messwert über dem vorgegebenen Stoß-Schwellwert (ss) liegt.

11. Mobiltelefon nach einem der Ansprüche 1 bis 8,
bei dem die akustische Anrufsignalisierung bei einem weiteren ankommenden Ruf wieder aktiviert wird,
wobei die akustische Anrufsignalisierung automatisch wieder deaktiviert wird, wenn der erfasste Stoß-Messwert über einem vorgegebenen Stoß-Schwellwert liegt, und wenn innerhalb eines vorgegebenen Zeitraums, der vor dem ankommenden Ruf bzw. vor der akustischen Anrufsignalisierung bzw. vor der Erfassung des über dem Stoß-Schwellwert (ss) liegenden Stoß-Messwertes liegt, kein Stoß-Messwert einen vorgegebenen Dynamik-Schwellwert überschritten hat.

12. Mobiltelefon nach einem der vorhergehenden Ansprüche,
bei dem der Stoß-Schwellwert (ss) in Abhängigkeit von Stoß-Messwerten an die Mobiltelefon-Dynamik angepasst wird.

13. Mobiltelefon nach Anspruch 12,
bei dem der Stoß-Schwellwert (ss) erhöht wird, sobald ein Stoß-Messwert einen Aktivitäts-Schwellwert überschreitet.

14. Mobiltelefon nach Anspruch 12 oder 13,
bei dem der Stoß-Schwellwert (ss) reduziert wird, wenn in einem vor der Reduzierung liegenden Prüfzeitraum, kein Stoß-Messwert einen Aktivitäts-Schwellwert überschritten hat.

## Claims

1. Mobile telephone (MT)
having an acoustic element (AE) for audible call signalling for an incoming call,
having a sensor device (SE) for capturing an impact measured value, and
having a processor device (PE) that is set up such that the audible call signalling is automatically deactivated when the captured measured value (sm) is above a prescribed impact threshold value (ss),
**characterized in that** it continues to be possible to take the call after the automatic deactivation of the audible call signalling.

2. Mobile telephone according to Claim 1,
in which the sensor device (SE) comprises an acceleration sensor.

3. Mobile telephone according to either of the preceding claims,
in which the sensor device (SE) is designed such that actions of force from the user on the mobile telephone (MT) are captured by means of an impact measured value.

4. Mobile telephone according to one of the preceding claims, in which vibration call signalling is activated or continued after the automatic deactivation of the audible call signalling.

5. Mobile telephone according to one of the preceding claims, in which visual call signalling is activated or continued after the automatic deactivation of the audible call signalling.

6. Mobile telephone according to one of the preceding claims, in which the automatic deactivation of the audible call signalling prompts the incoming call to be rejected or diverted to a call answering device.

7. Mobile telephone according to one of the preceding claims, in which the audible call signalling is automatically deactivated when the captured impact measured value is above a prescribed impact threshold value (ss) and when an impact measured value has not exceeded a prescribed dynamic threshold value within a prescribed period that is before the incoming call or before the audible call signalling or before the capture of the impact measured value that is above the impact threshold value (ss).

8. Mobile telephone according to one of the preceding claims, in which the impact threshold value (ss), the dynamic threshold value and/or the period can be set by the user.

9. Mobile telephone according to one of the preceding claims, in which the audible call signalling remains deactivated for further incoming calls.

10. Mobile telephone according to one of Claims 1 to 8,
in which the audible call signalling is activated again for a further incoming call at least until a captured impact measured value is above the prescribed impact threshold value (ss).

11. Mobile telephone according to one of Claims 1 to 8,
in which the audible call signalling is activated again for a further incoming call,
wherein the audible call signalling is automatically deactivated again when the captured impact measured value is above a prescribed impact threshold value and when an impact measured value has not exceeded a prescribed dynamic threshold value within a prescribed period that is before the incoming call or before the audible call signalling or before the capture of the impact measured value that is above the impact threshold value (ss).

12. Mobile telephone according to one of the preceding claims, in which the impact threshold value (ss) is matched to the mobile telephone dynamics on the basis of impact measured values.

13. Mobile telephone according to Claim 12,
in which the impact threshold value (ss) is increased as soon as an impact measured value exceeds an activity threshold value.

14. Mobile telephone according to Claim 12 or 13,
in which the impact threshold value (ss) is reduced when an impact measured value has not exceeded an activity threshold value in a check period that is before the reduction.

## Revendications

1. Téléphone mobile (MT) comprenant :
- un élément acoustique (AE) pour la signalisation acoustique d'un appel entrant ;
- un dispositif de détection (SE) pour détecter une valeur de mesure de choc ; et
- un dispositif processeur (PE) qui est conçu de manière telle que la signalisation d'appel acoustique est désactivée automatiquement lorsque la valeur de mesure détectée (sm) est supérieure à une valeur seuil de choc (ss) prédéterminée ;
**caractérisé en ce qu'**il reste possible de prendre l'appel après la désactivation automatique de la signalisation d'appel acoustique.

2. Téléphone mobile selon la revendication 1, selon lequel le dispositif de détection (SE) comprend un capteur d'accélération.

3. Téléphone mobile selon l'une des revendications précédentes, selon lequel le dispositif de détection (SE) est réalisé de manière telle que des applications de force par l'utilisateur sur le téléphone mobile (MT) sont détectées au moyen d'une valeur de mesure de choc.

4. Téléphone mobile selon l'une des revendications précédentes, selon lequel une signalisation d'appel par vibration est activée ou prolongée après la désactivation automatique de la signalisation d'appel acoustique.

5. Téléphone mobile selon l'une des revendications précédentes, selon lequel une signalisation d'appel optique est activée ou prolongée après la désactivation automatique de la signalisation d'appel acoustique.

6. Téléphone mobile selon l'une des revendications précédentes, selon lequel l'appel entrant est refusé ou est renvoyé vers un dispositif répondeur automatique à la désactivation automatique de la signalisation d'appel acoustique.

7. Téléphone mobile selon l'une des revendications précédentes, selon lequel la signalisation d'appel acoustique est désactivée automatiquement lorsque la valeur de mesure de choc détectée est supérieure à une valeur seuil de choc prédéterminée (ss) et lorsqu'aucune valeur de mesure de choc n'a dépassé une valeur seuil dynamique prédéterminée dans une période prédéterminée qui précède l'appel entrant resp. la signalisation d'appel acoustique resp. la détection de la valeur de mesure de choc supérieure à la valeur seuil de choc (ss).

8. Téléphone mobile selon l'une des revendications précédentes, selon lequel la valeur seuil de choc (ss), la valeur seuil dynamique et/ou la période peuvent être réglées par l'utilisateur.

9. Téléphone mobile selon l'une des revendications précédentes, selon lequel la signalisation d'appel acoustique reste désactivée pour d'autres appels entrants.

10. Téléphone mobile selon l'une des revendications 1 à 8, selon lequel la signalisation d'appel acoustique, lors d'un autre appel entrant, est réactivée au moins jusqu'à ce qu'une valeur de mesure de choc détectée soit supérieure à la valeur seuil de choc prédéterminée (ss).

11. Téléphone mobile selon l'une des revendications 1 à 8, selon lequel la signalisation d'appel acoustique est réactivée lors d'un autre appel entrant, la signalisation d'appel acoustique étant de nouveau désactivée automatiquement lorsque la valeur de mesure de choc détectée est supérieure à une valeur seuil de choc prédéterminée et lorsqu'aucune valeur de mesure de choc n'a dépassé une valeur seuil dynamique prédéterminée dans une période prédéterminée qui précède l'appel entrant resp. la signalisation d'appel acoustique resp. la détection de la valeur de mesure de choc supérieure à la valeur seuil de choc (ss).

12. Téléphone mobile selon l'une des revendications précédentes, selon lequel la valeur seuil de choc (ss) est adaptée à la dynamique du téléphone mobile en fonction de valeurs de mesure de choc.

13. Téléphone mobile selon la revendication 12, selon lequel la valeur seuil de choc (ss) est augmentée dès qu'une valeur de mesure de choc dépasse une valeur seuil d'activité.

14. Téléphone mobile selon la revendication 12 ou 13, selon lequel la valeur seuil de choc (ss) est réduite lorsqu'aucune valeur de mesure de choc n'a dépassé une valeur seuil d'activité dans une période d'essai précédant la réduction.
